Europäisches Patentamt

European Patent Office

Office européen des brevets

(11) Publication number: **0 414 201 A2**

# EUROPEAN PATENT APPLICATION

(21) Application number: **90115973.1**

(22) Date of filing: **21.08.90**

(51) Int. Cl.⁵: **G09F 13/18**

(30) Priority: **23.08.89 IT 1472589 U**

(43) Date of publication of application:
**27.02.91 Bulletin 91/09**

(84) Designated Contracting States:
**DE ES FR GB NL**

(71) Applicant: **MARECO S.P.A.**
**Via S. Croce, 171**
**I-47032 Bertinoro (Forli)(IT)**

(72) Inventor: **Corbara, Arnaldo**
**Via Rio Rose, 191**
**I-47032 Bertinoro, Forlî(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Illuminated sign structure.**

(57) The illuminated sign structure comprises a first profiled element (A) having an upper wing (1) defining a bridge (9) having fixed thereto a support (E) for an inductor (F). A lower wing (3) protrudes from the profiled element (A) and delimits compartments for a starter (M) and the lamp (G). A tab (8) provided on the wing (3) cooperates with a co-planar tab (7) to couple with a H-shaped support bearing the lamp (G), whilst a further tab (6) has fixed thereto a transparent plate (D). A second profiled element (B) has wedge-shaped teeth (2,4) which engage raised portions provided at the ends of the wings (1,3).

**FIG. 3**

## ILLUMINATED SIGN STRUCTURE

The present invention relates to an illuminated sign structure, and in particular to improvements in latent light signs and similar illuminated panels.

Latent-light signs and illuminated panels, already known for several years, exploit a particular physical property of some materials such as transparent polymethylmethacrylate (plexiglass), plates whereof are crossed in a latent manner by light rays emitted by lamps arranged against the edge of said plates.

The lamps used, which are generally of the fluorescent-tube type, are accommodated in a profiled element which is open longitudinally according to the thickness of the plate to be secured.

Frontal observation of signs and overhead projectors thus provided does not allow to see the lamps, which are concealed by the profiled element, as well as the emitted light which diffuses in the thickness of the plate, lighting, besides the exit edges, anything which can alter its transparency: ink or wax inscriptions, inscriptions made with transferable letters, screen printings, incisions and other types of intervention to be performed preferably on the face which is opposite to the viewing face, since they are intended to be lit from the inside of the plate.

Despite the appreciation shown by the market, the articles as they are currently provided have some severe disadvantages, all of which can be ascribed to the shape of the profiled element, which is open longitudinally just enough to secure the plate of transparent material.

Consequently, said plate must always have a suitable thickness, and the lamp, the glow switch or starter and the inductor must furthermore be inserted from one end of the profiled element, as if it were tubular, with the risk of inadvertently compromising the electric contacts and the integrity of the conducting wires.

Apart from the impossibility of visually checking the conditions of the electric system after every insertion of a lamp, it should be noted that in some cases it may be necessary to temporarily remove the sign if it is installed proximate to obstacles which prevent the full extraction of the old lamp and the subsequent insertion of the new one.

The aim of the present invention is to obviate all of the above described disadvantages by virtue of some original improvements which will be described with the aid of two drawings, given only by way of non-limitative example, wherein:

figure 1 is a front cutout view of a latent-light sign;

figure 2 is a lateral or profile view of said sign;

figure 3 is a detail view of the transverse cross section of the two profiled elements which form the container in which the lamp, the inductor and the glow switch or starter are to be arranged, furthermore coupling the transparent plate thereto;

figure 4 is a side view of one of the numerous possible embodiments.

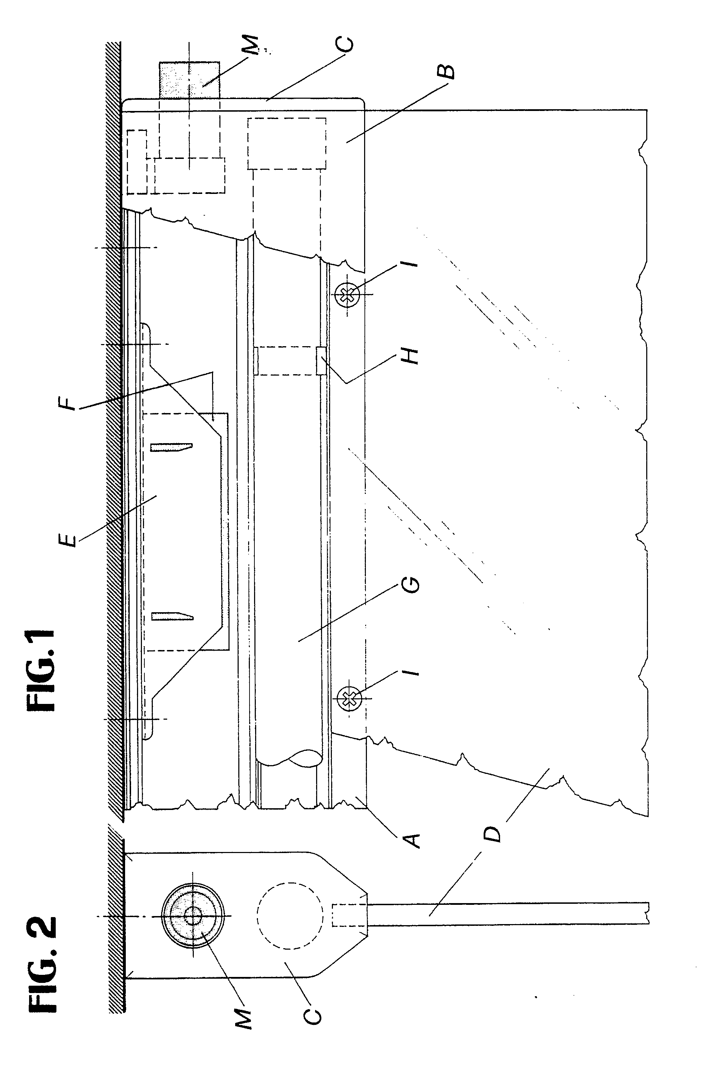

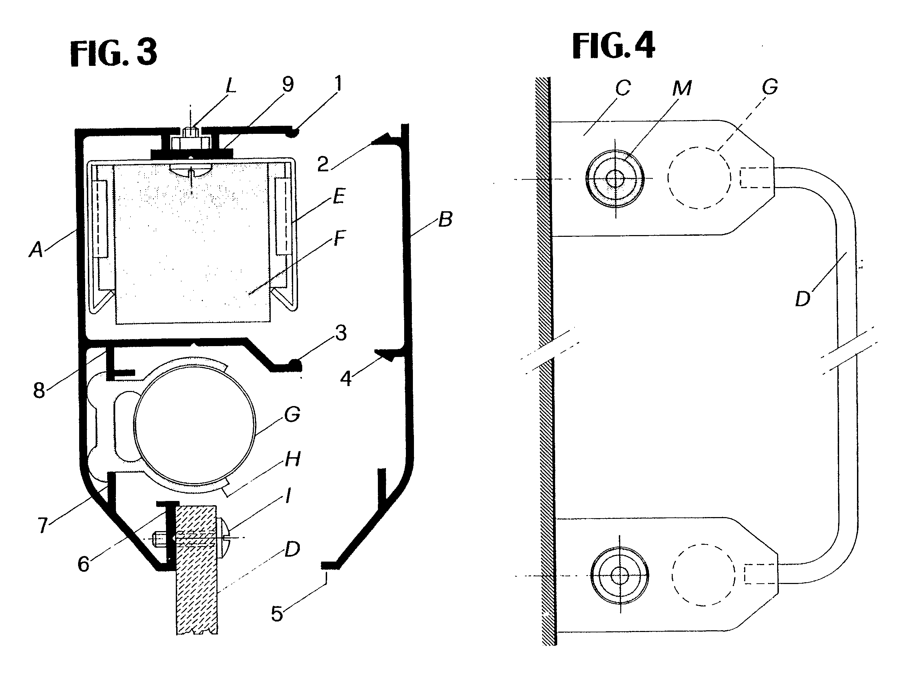

By observing the above drawings, it can be seen first of all that the transparent plate D, the fluorescent-tube lamp G, the inductor F and the glow switch or starter M are all secured in the profiled element A, which is intended to be fixed to a ceiling (figure 2) or to a wall (figure 4) and is adapted so that it is possible to couple thereto the cover B by pressure.

Two end plugs C, obtained by injection-molding of plastic material, are provided at the two ends of the container formed by the coupling of the profiled elements A and B, both of which are produced by extrusion of aluminum or of another suitable material; at least one of said plugs can be perforated so that the glow switch M, the coupling whereof is fixed to the inside of the profiled element A, protrudes enough to allow its replacement without removing the cover B or the end plugs C.

By observing the profiled element A in detail (figure 3), it can be seen that the upper wing 1 is centrally interrupted by the seat for the nuts of the bolts L which fix to the bridge 9 the metallic support E of the inductor F. The screws for fixing the sign to the ceiling or to the wall pass through the same bridge 9, which is grooved for the centering of the holes.

The lower wing 3, the one which separates the compartment of the glow switch M and of the inductor F from the one of the lamp G, is also centrally grooved to allow the exact positioning of the holes through which access is gained with a screwdriver to the screws inserted in the bridge 9.

A vertical tab 8 extends downward from the lower wing 3 and, together with a co-planar and opposite a tab 7, permits the coupling of two supports H made of flexible material so as to allow the pressure-insertion therein of the lamp or fluorescent tube G.

The profiled element A ends downward with an inward and upward fold with a vertical tab 6 which is grooved longitudinally for centering the self-threading screws by means of which the transparent plate D is fixed thereto.

A raised portion at the end of the tab 6 acts as reference for the vertical positioning of the plate to be fixed.

The cover or profiled element B, which is externally shaped so as to form, together with the profiled element A, an overall profile which is symmetrical with respect to the median plane of the transparent plate D, and which is internally characterized most of all by the wedge-shaped teeth 2 and 4 which protrude horizontally so as to elastically divaricate the wings 1 and 3 and engage the rounded raised portions of their ends.

Since the distance between the tab 6 of the profiled element A and the end 5 of the cover B is fixed, the possible use of thinner plates D can be corrected by means of gaskets to be arranged full-length against the two faces of the plates D so that they are held by the application of the fixing screws I of the plate, which in this manner is in any case centered with respect to the lamp G and with respect to the container consituted by the profiled elements AB.

Though, as mentioned, it is preferable that the means for supporting the signs or overhead projectors thus provided be applied to the bridge 9 of the wing 1, this does not exclude the possibility of perforating and using the vertical wall of the profiled element 1 if wall-mounting is to be performed.

Considering the well-tested property of transparent polymethylmethacrylate plates, one might use plates which, when appropriately curved, would allow to fix the signs to the wall in the same manner that they are fixed to the ceiling, i.e. by applying the supporting means to the bridge 9.

A similar application is shown in figure 4, in which, among other things, a particularly wide plate D is hypothesized and is consequently provided with two lighting units which, applied along two parallel edges of the plate, also ensure adequate support.

The cover of each of said two containers is obviously directed outward to facilitate the periodic replacement of failed or exhausted components as well as interventions on the terminal strip for the connection of the electric wires. In this embodiment of signs and overhead projectors as in other ones, the terminal strip can in fact be fixed to the profiled element A in the same compartment which contains the inductor F and the glow switch M.

As regards the lighting of the transparent plate, particularly effective executions are also provided using so-called "black light" or "Wood light" lamps to light inscriptions and drawings made with fluorescent paints.

Finally, it should be added that the improvements according to the invention, without varying the general characteristics described, are in practice susceptible to further modifications and variations, especially aesthetical ones, which are in any case comprised within the scope of the present patent.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Illuminated sign structure, characterized in that it comprises a lamp, a glow switch, an inductor and means for connecting the electric wires all accommodated and secured in a profiled element (A) which is laterally accessible and to which the plate of transparent material is also fixed, a snap-together coupling of a profiled element (B) being provided as an element for the lateral closure of said profiled element (A).

2. Sign structure according to claim 1, characterized in that the container formed by the profiled elements (A) and (B), which are obtained by extrusion of aluminum or of another suitable material, is completed, at its ends, by two plastic plugs C at least one of which is perforated so that the glow switch protrudes just enough to allow its replacement directly from outside.

3. Sign structure according to the preceding claims, characterized in that the snap-together coupling of the profiled elements (A) and (B) is provided by two wedge-shaped teeth (2) and (3) of the second profiled element (B) and by the rounded raised portions provided at the ends of the wings 1 and 3 of the first profiled element (A) which vertically delimit the compartment intended to accommodate the inductor, the glow switch and a terminal strip for connection of the electric wires, separating said compartment from the underlying lamp.

4. Sign structure according to the preceding claims, characterized in that the upper wing (1) of the profiled element (A) is centrally interrupted by a depressed seat which is closed downward by a bridge (9) and can be used both for possible suspension coupling means as well as for the nuts of the bolts for the fixing of the inductor metallic support.

5. Sign structure according to the preceding claims, characterized in that a vertical tab (8) extends downward from the lower wing (3) of the profiled element (A) and, together with a co-planar and opposite tab (7), allows the engagement of the supports (H), flexible arms whereof secure a tube-shaped lamp (G) and keep it centered with respect to the edge of an underlying transparent plate (D).

6. Sign structure according to the preceding claims, characterized in that the profiled element (A) ends downward with a tab (6) which is folded inward and upward and is intended for the coupling of the transparent plate through fixing means.

7. Sign structure according to claim 6, characterized in that in the end of the vertical tab (6) a raised portion acts as resting reference for the exact vertical positioning of the transparent plate to be fixed.

8. Sign structure according to the preceding claims, characterized in that the bridge (9) of the profiled element (A) is intended for the fixing of the support of the inductor as well as for the fixing of the entire sign to a supporting structure, two V-shaped grooves being provided in said bridge (9) and in the underlying wing (3), both grooves being centered with respect to the entire container (AB) to allow centering at the bridge (9) of the holes for the screws and the vertical alignment of the corresponding holes to be defined in the lower wing (3) for the passage of the screwdriver.

9. Sign structure according to the preceding claims, characterized in that plates thinner than the thickness of the container (AB) are used, a thickening, which can be provided by means of rubber or plastic gaskets, being divided equally between the two sides of the plate and is secured by the screws for fixing said plate to the profiled element (A), whereby to keep the edge of said plate centered with respect to the overlying light source.

**FIG. 2**

**FIG.1**

EP 0 414 201 A2

# FIG. 3

# FIG. 4

EP 0 414 201 A2